(19) Europäisches Patentamt
European Patent Office
Office européen des brevets

(11) **EP 3 144 060 B1**

(12) **FASCICULE DE BREVET EUROPEEN**

(45) Date de publication et mention de la délivrance du brevet:
**13.06.2018  Bulletin 2018/24**

(51) Int Cl.:
***B01J 19/32*** *(2006.01)*     ***B01D 3/26*** *(2006.01)*
*B01D 53/18* *(2006.01)*     *B01J 19/02* *(2006.01)*

(21) Numéro de dépôt: **16188390.5**

(22) Date de dépôt: **12.09.2016**

(54) **STRUCTURE DE GARNISSAGE OPTIMISEE POUR COLONNE DE MISE EN CONTACT DE FLUIDES ET PROCEDE DE FABRICATION**

STRUKTUR FÜR OPTIMIERTE AUSKLEIDUNG FÜR EINE FLÜSSIGKEITSKONTAKTSÄULE, UND HERSTELLUNGSVERFAHREN

OPTIMISED STRUCTURED PACKING FOR FLUID CONTACTING COLUMN AND METHOD OF MANUFACTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **15.09.2015  FR 1558652**

(43) Date de publication de la demande:
**22.03.2017  Bulletin 2017/12**

(73) Titulaires:
• **IFP Energies nouvelles**
  **92500 Rueil-Malmaison (FR)**
• **Lacombe, Alain**
  **33600 Pessac (FR)**

(72) Inventeurs:
• **ROESLER, John**
  **38200 VIENNE (FR)**
• **LACOMBE, Alain**
  **33600 PESSAC (FR)**

(56) Documents cités:
**FR-A1- 2 892 644     FR-A1- 2 913 897**

## Description

La présente invention concerne le domaine des équipements de mise en contact de fluides.

Les colonnes de mise en contact ont pour but de mettre en contact des fluides afin de réaliser des transferts de matière ou de chaleur entre les fluides. Ce type d'équipement de mise en contact de fluides est largement utilisé pour réaliser des opérations de distillation, de rectification, d'absorption, d'échange de chaleur, d'extraction, de réaction chimique, etc.

Les colonnes de mise en contact sont généralement constituées d'une enceinte munie d'éléments de mise en contact interne favorisant l'échange entre les fluides. En général, la colonne permet de mettre en contact intime une phase gazeuse ascendante avec une phase liquide descendante, ou inversement. Dans la colonne, les fluides peuvent circuler à co-courant ou à contre-courant. Les éléments de mise en contact qui augmentent la surface de contact entre les fluides, peuvent être des plateaux, un garnissage structuré, (c'est-à-dire la juxtaposition de plusieurs éléments unitaires identiques ou non, agencés de manière ordonnée, par exemple des feuillets ondulés) ou un garnissage en vrac (c'est-à-dire des empilements anarchiques d'éléments unitaires, par exemple des anneaux, des spirales).

Le document EP 0 449 040 décrit des éléments de garnissage interne permettant de favoriser les échanges entre les fluides, de repousser les limites de blocage de circulation des fluides tout en présentant des résistances accrues aux agressions chimiques ou à la corrosion.

Dans les applications des colonnes de mises en contact de fluides, notamment la distillation ou l'absorption réactive nécessitant le lavage d'un fluide par une solution absorbante, par exemple la désacidification d'un gaz naturel ou la décarbonatation des fumées de combustion, il est primordial de disposer des meilleurs éléments de mise en contact qui présentent une surface de contact maximum, tout en limitant la perte de charge dans la colonne, et qui présentent des coefficients de transfert (liquide et gaz) maximums.

Ainsi, le brevet FR 2913897 (US 8505884) propose une structure de garnissage interne d'une colonne de mise en contact de fluides bien adaptée aux applications de distillation et d'absorption réactive, qui permet notamment d'augmenter la surface d'échange entre les fluides en limitant l'augmentation de la perte de charge. La structure de garnissage décrite dans ce brevet est formée par un agencement ordonné de faisceaux de tubes, les tubes comportant des orifices pour favoriser les échanges. Les tubes de chaque faisceau sont orientés selon deux directions ou selon quatre directions d'un cube. Toutefois, la capacité de cette structure de garnissage reste peu élevée pour les applications visées. La capacité d'un garnissage correspond à la quantité de gaz passant dans un garnissage sans être en engorgement, c'est-à-dire sans créer d'accumulation de gaz dans une partie du garnissage.

Ainsi, la présente invention concerne une structure de garnissage formée par un agencement ordonné de faisceau de tubes. Pour chaque faisceau de tubes, les tubes sont orientés selon les quatre directions formées par les diagonales d'un parallélépipède rectangle, qui possède une dimension supérieure aux autres. Ainsi, cet agencement des tubes permet une inclinaison des tubes sur l'axe de la colonne apportant une augmentation de la capacité de la structure de garnissage.

## Le dispositif et le procédé selon l'invention

L'invention concerne une structure de garnissage d'une colonne de mise en contact de fluides, ladite structure formant un volume comportant un agencement ordonné de faisceaux de tubes, les parois desdits tubes comportant des orifices disposés de manière à favoriser la circulation et le mélange des fluides dans ladite structure. Chaque faisceau comprend quatre tubes respectivement orientés suivant les quatre directions formées par les diagonales d'un parallélépipède rectangle, ledit parallélépipède rectangle comportant une dimension d'un côté supérieure aux autres.

Selon l'invention, la plus grande dimension du parallélépipède rectangle est orientée selon la direction verticale de ladite structure du garnissage, selon un axe vertical. Avantageusement, l'angle d'orientation de l'axe desdits tubes par rapport à un axe vertical est compris entre 20 et 50°, de préférence entre 30 et 45°.

De préférence, le diamètre hydraulique des tubes est compris entre 5 et 50 mm.

Selon un mode de réalisation de l'invention, lesdits tubes ont sensiblement une section circulaire ou elliptique.

De manière avantageuse, la section desdits tubes est un polygone.

Conformément à un mode de réalisation de l'invention, ladite structure comporte une pluralité de blocs parallélépipédiques formés par l'agencement ordonné de faisceaux de tubes.

Selon une caractéristique, lesdits orifices sont inscrits dans des rectangles dont les côtés mesurent entre 2 et 45 mm et chacun desdits orifices s'étend sur une aire supérieure à 2 mm$^2$.

Conformément à une conception de l'invention, le rapport entre l'aire des orifices et l'aire de la partie pleine desdits tubes est compris entre 10 et 90 %, de préférence entre 25 et 50 %.

De manière préférée, lesdits tubes comportent un tissage d'au moins deux rubans enroulés suivant au moins deux hélices croisées s'étendant selon un même axe et un même diamètre, lesdits rubans étant distants les uns des autres de manière à former lesdits orifices.

Conformément à un mode de réalisation, lesdits tubes sont formés par une pluralité d'anneaux reliées par au moins une tige, ladite tige étant disposée selon une génératrice dudit tube.

Selon une variante, lesdits tubes sont réalisés dans un matériau choisi parmi le carbone figé par dépôt de carbone, un métal, une céramique, un matériau polymère un matériau thermoplastique, un matériau thermodurcissable.

De plus, l'invention concerne une colonne de mise en contact de fluides comprenant un garnissage, ledit garnissage comportant une structure de garnissage selon l'une des caractéristiques précédentes.

En outre, l'invention concerne une utilisation d'une colonne de mise en contact de fluides selon l'invention dans un procédé de distillation, un procédé d'absorption réactive, tel que la capture de gaz acides et le traitement de gaz naturel.

L'invention concerne également un procédé de fabrication d'une structure de garnissage d'une colonne de mise en contact de fluides, dans lequel on réalise les étapes suivantes :

a) on fabrique des tubes comportant des orifices disposés de manière à favoriser la circulation et le mélange des fluides dans la structure ;

b) on construit un assemblage ordonné desdits tubes en juxtaposant des faisceaux de tubes, lesdits faisceaux de tubes comprenant quatre tubes respectivement orientés suivant les quatre directions formées par les diagonales d'un parallélépipède rectangle, ledit parallélépipède rectangle comportant une dimension supérieure aux autres ; et

c) on réalise une liaison des tubes au niveau de leur portion de contact.

Selon un mode de réalisation, à l'étape a), on fabrique des tubes de section circulaire ou elliptique.

Alternativement, la section desdits tubes est un polygone.

Selon une variante de réalisation, on oriente la plus grande dimension dudit parallélépipède rectangle selon la direction verticale de ladite structure de garnissage, selon un axe vertical. Conformément à une caractéristique, ledit procédé comprend une étape d'usinage de l'assemblage ordonné pour former des blocs parallélépipédiques rectangles, et une étape d'agencement des blocs dans ladite colonne de mise en contact.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre un exemple de tube pour une structure de garnissage selon l'invention.

La figure 2 illustre un deuxième exemple de tube pour une structure de garnissage selon l'invention.

La figure 3 représente un faisceau de tubes pour une structure de garnissage selon l'invention.

La figure 4 représente un agencement de faisceaux de tubes pour une structure de garnissage selon l'invention.

La figure 5 illustre une structure de garnissage selon un mode de réalisation de l'invention.

La figure 6 illustre un troisième exemple de tube pour une structure de garnissage selon l'invention.

La figure 7 est une vue de la section de passage pour un tube elliptique dans un agencement de faisceaux de tubes selon un mode de réalisation de l'invention.

La figure 8 illustre une section d'un tube elliptique selon une variante de réalisation de l'invention.

La figure 9 représente une colonne de mise en contact comprenant des blocs de structure de garnissage selon un mode de réalisation de l'invention.

La figure 10 représente les pertes de charge linéique pour un taux d'arrosage de 100 $m^3/h/m^2$ pour une structure de garnissage selon l'art antérieur et pour une structure de garnissage selon l'invention.

La figure 11 représente les pertes de charge linéique pour un taux d'arrosage de 50 $m^3/h/m^2$ pour une structure de garnissage selon l'art antérieur et pour une structure de garnissage selon l'invention.

**Description détaillée de l'invention**

La présente invention concerne une structure de garnissage d'une colonne de mise en contact de fluides. La structure de garnissage selon l'invention forme un volume comportant un agencement ordonné de faisceaux de tubes. On appelle tube, un cylindre creux, possédant une section sensiblement constante, et dont la dimension perpendiculaire à la section (selon la génératrice du cylindre) est la plus grande dimension de l'élément creux. Un tube peut avoir une section quelconque, par exemple carré, rectangulaire, polygonale, circulaire, elliptique...Selon l'invention, les parois des tubes comportent des orifices disposés de manière à favoriser la circulation et le mélange des fluides dans la structure.

Selon l'invention, chaque faisceau de tubes comprend quatre tubes orientés suivant les quatre directions des diagonales d'un parallélépipède rectangle (ou pavé).. Ainsi, le parallélépipède rectangle n'est pas un cube et comporte donc une dimension supérieure aux autres dimensions, ce qui permet de réduire les angles d'orientation des tubes par rapport au plan vertical, car ces angles sont différents des angles formés par les directions d'un cube. Ainsi, il est possible d'augmenter la capacité de la structure de garnissage. On rappelle que la capacité d'un garnissage correspond à la quantité de gaz passant dans un garnissage sans être en engorgement, c'est-à-dire sans créer d'accumulation de gaz dans une partie du garnissage. Les directions des tubes correspondent sensiblement aux quatre diagonales d'un parallélépipède rectangle, à ceci près que les tubes ne s'entrecoupent pas au niveau de l'intersection théorique des diagonales au centre du parallélépipède rectangle, mais se croisent au voisinage de ce point.

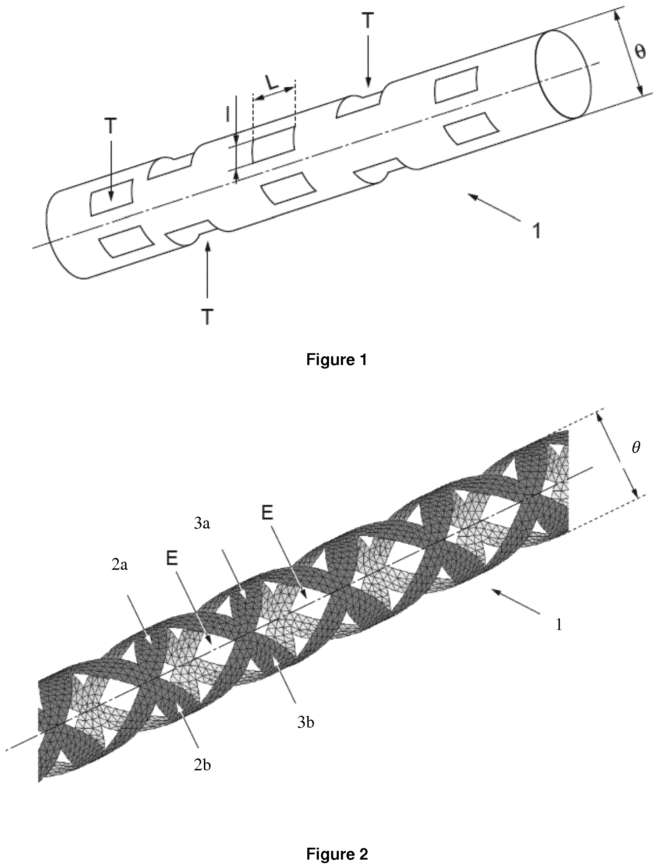

La figure 1 représente un exemple non limitatif de réalisation d'un l'élément tubulaire 1 composant le motif de base d'un garnissage structuré selon l'invention. Le tube de la figure 1 est présenté avec une section sensiblement circulaire, toutefois, le tube peut avoir une section de forme différente : carré, rectangle, polygone, cercle, ellipse,... Toutes les formes de réalisation de la section du tube sont compatibles avec les différents modes de réalisation décrits ci-dessous.

L'élément 1 est constitué d'une paroi en forme de tube de diamètre hydraulique θ pourvue d'orifices ou trous T. Le diamètre hydraulique d'un tube est une notation communément utilisée pour le calcul des écoulements dans un tube, une conduite hydraulique ou un canal, de manière à faire des calculs similaires à ceux d'un tube de section circulaire, lorsque la section du tube n'est pas circulaire. Le diamètre hydraulique θ peut être défini selon une formule du type : $\theta = \frac{4A}{P}$ avec A l'aire de la section de passage du tube et P le périmètre de la section de passage du tube. Pour un tube de section circulaire, le diamètre hydraulique correspond au diamètre géométrique. Selon l'invention, on choisit les dimensions des orifices T et du diamètre hydraulique θ de manière à optimiser les circulations et la mise en contact des fluides. Selon un mode de réalisation de l'invention, le diamètre hydraulique θ de l'élément tubulaire 1 est compris entre 5 et 50 mm de manière à optimiser l'aire géométrique par unité de volume d'un garnissage structuré composé de tels tubes. Ces dimensions permettent de développer l'aire géométrique par unité de volume, et en maintenant une faible perte de charge, de façon à être compatibles avec les applications visées.

Selon une conception avantageuse de l'invention, on choisit l'aire minimum des orifices T supérieure à 2 mm², de préférence 4 mm², de manière à ce que le film liquide qui s'écoule à l'intérieur des tubes puisse être cassé par un flux de gaz qui traverse les orifices. En effet, si la taille des orifices T est inférieure à 2 mm², le film liquide qui circule sur la paroi interne d'un tube risque de boucher par capillarité ces orifices. Les orifices présentant une surface supérieure à 2 mm² permettent le passage des phases gazeuses et liquides d'un tube à l'autre, et d'assurer ainsi un bon contact et un bon mélange. Dans l'application du garnissage selon l'invention à l'absorption réactive, on préfère utiliser des tubes munis d'orifices dont l'aire est supérieure à 4 mm², voire 8 mm². En effet, en général, les fluides mis en contact dans une colonne d'absorption réactive circulent à grande vitesse, typiquement à des vitesses comprises entre 1 m/s et 2 m/s. De ce fait, on prévoit des orifices plus grands afin de fragmenter le film liquide en circulation à la paroi des tubes.

Selon une variante de réalisation de l'invention, les orifices T sont inscrits dans des rectangles de longueur L et de largeur l comprises entre 2 et 45 mm, de préférence entre 3 et 20 mm. Autrement dit, un orifice doit toucher les quatre côtés d'un rectangle de longueur L et de largeur l. Par contre, la forme d'un orifice T peut être quelconque, tant qu'il reste inscrit dans un rectangle de dimensions L et l. L'orifice peut avoir une forme sensiblement circulaire, une forme d'ellipse, une forme de losange... Le fait d'inscrire les orifices dans des rectangles de dimensions L et l permet d'imposer une dimension minimum entre les bords des orifices, afin de provoquer la cassure du film liquide circulant sur la paroi des tubes du garnissage.

Les orifices T sont disposés de manière ordonnée ou aléatoire. De préférence, les orifices T sont disposés de manière régulière pour obtenir des caractéristiques d'échanges homogènes le long de l'élément 1. De préférence, l'espace entre deux orifices n'excède pas 2 fois la valeur du diamètre hydraulique θ. On peut choisir le nombre d'orifices de manière à ce que l'élément 1 comporte entre 10% et 90% d'ouverture, c'est-à-dire que le rapport entre l'aire des orifices et l'aire de la partie pleine du tube soit compris entre 10% et 90%, une excellente valeur de ce rapport étant comprise entre 25% et 50%.

Les orifices T tels que définis ci-dessus, ouvrent des voies de communication au fluide entre l'intérieur et l'extérieur de l'élément 1 afin d'optimiser le mélange entre les phases, donc le contact et la redistribution entre les phases, circulant dans un garnissage structuré composé de tubes 1.

Les tubes 1 peuvent être réalisés avec tout type de matériau, par exemple en carbone/carbone, c'est-à-dire une structure en fibres de carbone figée par dépôt de carbone, en céramique, en métal, en matière polymère, en matériau thermoplastique ou en matériau thermodurcissable. Les orifices T peuvent être obtenus par retrait de matière, par exemple par usinage ou perçage. L'élément 1 peut être obtenu par moulage, par exemple d'un matériau polymère, par formage, ou tout autre procédé.

La figure 2 illustre un mode particulier de réalisation de l'élément 1 de la figure 1, par tressage de rubans. Le tube de la figure 2 est présenté avec une section sensiblement circulaire ; toutefois, le tube peut avoir une section de forme différente : carré, rectangle, polygone, cercle, ellipse... Toutes les formes de réalisation de la section du tube sont compatibles avec les différentes variantes de réalisation décrites ci-dessous.

Selon le mode de réalisation illustré, l'élément tubulaire 1 de la figure 2 est réalisé par tissage de rubans, par exemple des mèches, des fils, des feuillards, épousant une forme tubulaire. Plus précisément, lors de sa fabrication, un ruban 2a est enroulé, en formant une hélice, autour d'un tube de diamètre hydraulique θ. Un deuxième ruban 2b est également enroulé, en formant une hélice, autour du même tube, en étant croisé par rapport au ruban 2a. On choisit l'épaisseur des rubans et le pas des hélices de manière à ce qu'il subsiste des espaces E entre les rubans. De préférence, le pas de l'hélice 2a est identique au pas de l'hélice 2b. Les espaces E jouent le même rôle que les orifices T de la figure 1. Les définitions géométriques des espaces E et du diamètre hydraulique $\theta$ sont respectivement identiques aux orifices T et au diamètre hydraulique $\theta$ décrits en référence à la figure 1.

Sur la figure 2, en outre, l'élément de garnissage comporte deux rubans supplémentaires 3a et 3b, enroulés selon des hélices respectivement identiques à celles des rubans 2a et 2b et décalées axialement. Ainsi, les espaces E sont sensiblement en forme de losange dont les côtés sont matérialisés par les rubans 2a, 2b, 3a et 3b.

Sans sortir du cadre de l'invention, on peut réaliser des éléments tubulaires 1 en faisant varier différents paramètres, par exemple le nombre de rubans, l'épaisseur et la largeur de chacun des rubans, le pas de l'hélice d'enroulement, voire effectuer des enroulements de rubans selon des hélices à pas variable.

Une fois l'enroulement de rubans effectué, on fige la structure de rubans tissés, par exemple par une technique décrite dans le document EP 0 499 040, par traitement thermique, par imprégnation de résine, par collage, par soudage ou par toute autre technique. Par exemple, les rubans sont des mèches en fibres de verre ou de carbone, éventuellement enduites d'un matériau thermodurcissable, par exemple une résine phénolique ou une résine époxyde.

Pour tous les modes de réalisation de l'invention, les tubes peuvent être réalisés avec tout type de matériau, par exemple en carbone/carbone, c'est-à-dire une structure en fibres de carbone figée par dépôt de carbone, en céramique, en métal, en matière polymère, en matériau thermoplastique ou en matériau thermodurcissable. Les orifices peuvent être obtenus par retrait de matière, par exemple par usinage ou perçage. L'élément 1 peut être obtenu par moulage, par exemple d'un matériau polymère, par formage, ou tout autre procédé.

Selon l'invention, chaque faisceau de tubes comprend quatre tubes orientés suivant les quatre directions formées par les diagonales d'un parallélépipède rectangle, ce dernier comportant au moins une dimension (d'un côté) supérieure aux autres dimensions (des autres côtés) pour augmenter la capacité de la structure de garnissage. Ainsi, les tubes sont positionnés sensiblement suivant les quatre diagonales d'un parallélépipède rectangle, à ceci près que les tubes ne s'entrecoupent pas au niveau de l'intersection des diagonales au centre du parallélépipède rectangle, mais se croisent au voisinage de ce point. Le parallélépipède rectangle est orienté de telle sorte que sa plus grande dimension (la longueur) soit placée sensiblement suivant l'axe de la colonne dans laquelle il est inséré (direction des écoulements gazeux et/ou liquides), cet axe est généralement vertical. Grâce à cet agencement des tubes et à l'inclinaison résultante des tubes par rapport au plan vertical, la capacité de la structure de garnissage est augmentée.

Selon un mode de réalisation de l'invention, le parallélépipède rectangle comporte une base carré.

Avantageusement, l'angle formé par l'axe de chaque tube par rapport à un axe vertical, dans un plan vertical passant par l'axe du tube, est compris entre 20 et 55°, avantageusement entre 20 et 50° pour obtenir un effet important pour la capacité de la structure de garnissage. De manière préférée, cet angle est compris entre 30 et 45° pour obtenir des résultats optimaux en termes de capacité de la structure de garnissage.

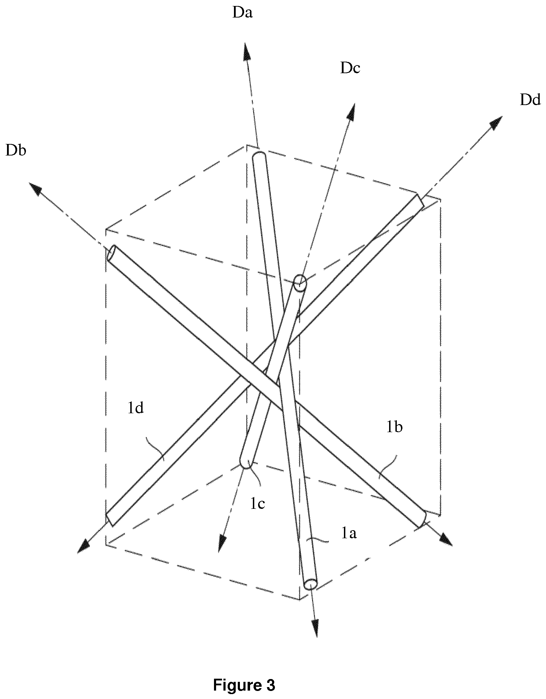

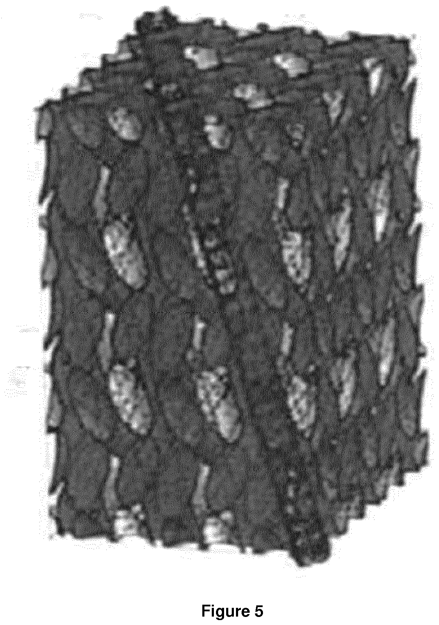

La figure 5 représente un assemblage d'éléments tubulaires selon l'invention, les tubes étant disposés suivant quatre directions distinctes d'un parallélépipède rectangle. Les tubes des figures 3 à 5 sont représentés avec une section sensiblement circulaire, toutefois, les tubes peuvent avoir une section de forme différente : carré, rectangle, polygone, cercle, ellipse ... Toutes les formes de réalisation de la section du tube sont compatibles avec les différents modes de réalisation décrits ci-dessous.

L'agencement détaillé de cet assemblage est décrit en référence aux figures 3, 4 et 5. La figure 3 illustre un faisceau de quatre tubes 1a à 1d, chacun étant disposé suivant l'une des quatre directions d'assemblage Da à Dd. Les quatre directions Da à Dd dans lesquelles les tubes sont assemblés correspondent respectivement aux quatre diagonales d'un parallélépipède rectangle, à ceci près que les tubes ne s'entrecoupent pas au niveau de l'intersection des diagonales au centre du parallélépipède rectangle, mais se croisent au voisinage de ce point.

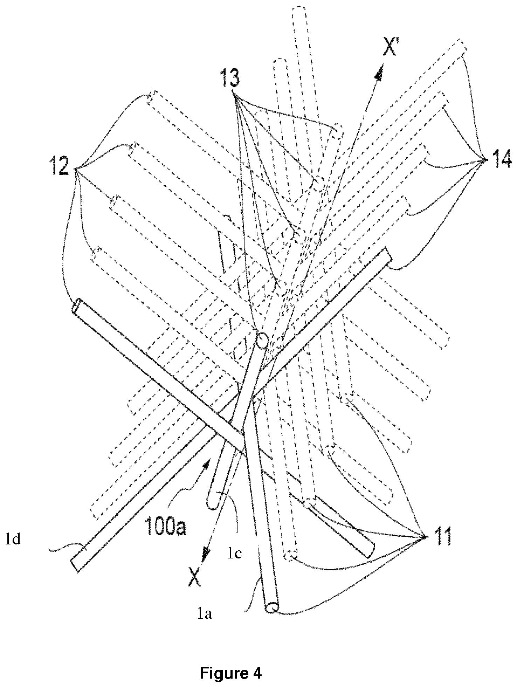

La construction de l'assemblage ordonné peut débuter par exemple en répétant la disposition de la figure 3, c'est à dire en disposant suivant un axe de construction XX' présenté en figure 4, correspondant au point d'entrecroisement des quatre tubes d'un faisceau, un nouveau faisceau de tubes 1a à 1d disposé dans le même ordre que le faisceau précédent, et ainsi de suite. On obtient ainsi, comme représenté sur la figure 4, un début d'assemblage ordonné formé d'une première rangée 100a de faisceaux de tubes 1a à 1d alignés suivant l'axe. On forme ainsi un entrecroisement de quatre réseaux de tubes 11 à 14 qui s'étendent chacun dans un plan orienté suivant une des quatre directions d'assemblage des tubes dans un faisceau. Les tubes de chaque réseau sont espacés les uns des autres par une distance permettant le passage (entrecroisement) des tubes des autres réseaux.

Lorsqu'on a atteint le nombre désiré de faisceaux dans la rangée 100a, on superpose ensuite plusieurs séries de rangées de faisceaux suivant des axes parallèles à l'axe XX' de manière à remplir le volume libre autour de la rangée 100a. Ensuite, la structure de garnissage est obtenue par ajout d'une rangée supplémentaire de faisceaux selon un nouvel axe parallèle à l'axe de construction XX'. On complète ensuite de la même façon le volume libre de part et d'autre de la rangée, typiquement jusqu'à l'extrémité des tubes de la rangée 100a, de manière à obtenir dans ce volume une structure tridimensionnelle formée de tubes respectivement disposés suivant quatre directions.

Selon une variante de réalisation de l'invention, et dans les assemblages de tubes décrits en référence aux figures 3 à 5, les tubes sont liés entre eux au niveau des portions de contact entre tubes. La liaison peut être réalisée par un procédé chimique ou mécanique, par exemple, à l'aide d'une résine thermoplastique ou thermodurcissable, par collage, par dépôt de carbone, par soudage, par crochetage mécanique ou autre moyen.

Selon un mode de réalisation de l'invention, les blocs de garnissage structuré peuvent être usinés aux dimensions et à la forme de la colonne de mise en contact. En général, les colonnes de mise en contact comportent une enceinte cylindrique. Dans ce cas, on usine l'assemblage ordonné de tubes pour obtenir une structure de garnissage qui présente une forme cylindrique qui peut être introduite dans l'enceinte cylindrique de la colonne de manière à occuper un maximum d'espace dans la colonne et offrir ainsi une surface d'échange optimale.

Pour les colonnes de grand diamètre, on effectue une juxtaposition de plusieurs blocs. Les blocs situés à la périphérie interne de la paroi sont usinés pour être adaptés à la forme cylindrique de la colonne. L'usinage des blocs formés par l'assemblage des éléments tubulaires est très délicat compte tenu de la forte porosité intrinsèque à la construction. Selon la nature des matériaux, on emploie des techniques particulières d'usinage pour éviter le flambage des éléments ou l'effondrement de la structure, par exemples par usinage laser, jet d'eau ou usinage à grande vitesse d'outils.

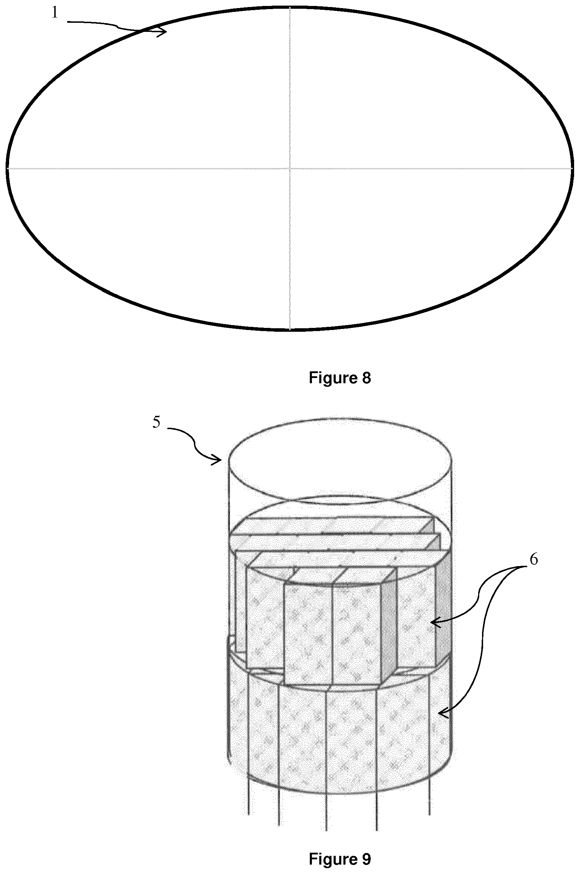

Alternativement, les blocs de garnissage structuré peuvent être découpés ou usinés sous forme de blocs parallélépipédiques rectangles, dont la grande dimension sera disposée lors de son agencement dans une colonne de mise en contact, parallèlement à l'axe de la colonne, c'est-à-dire l'axe vertical. L'agencement des blocs peut être réalisé par tranches successives, sans orientation particulière de la base des blocs d'une tranche à l'autre. La figure 5 est un exemple de bloc parallélépipédique rectangle pouvant être usiné pour ce mode de réalisation de l'invention. La figure 9 illustre un exemple non limitatif d'agencement de blocs parallélépipédiques rectangles 6 dans une colonne 5. Pour cet exemple, les blocs sont répartis sur deux tranches de garnissage structuré disposées l'une au-dessus de l'autre.

Selon un mode de réalisation de l'invention, la section des tubes a une forme elliptique. Cette forme elliptique de la section des tubes permet d'obtenir un agencement solide des faisceaux de tubes de la structure de garnissage selon l'invention (faisceau de quatre tubes orientés selon les quatre directions des diagonales d'un parallélépipède rectangle). En effet, les tubes de section circulaire sont moins adaptés pour l'obtention d'un agencement solide dans le cas d'une structure parallélépipédique. De plus, l'agencement de tubes de section elliptique permet d'assurer un bon espacement entre les tubes et d'assurer des points de contact entre les tubes. De manière avantageuse, la géométrie et les dimensions de l'ellipse sont liées à la géométrie et aux dimensions du parallélépipède rectangle.

De plus, les spécificités géométriques décrites en rapport avec la figure 1 (diamètre hydraulique compris entre 5 et 50 mm, aire des orifices supérieure à 2mm$^2$, orifices inscrits dans un rectangle de longueur L et de largeur l comprises entre 2 et 45 mm, de préférence entre 3 et 20 mm...) sont également valables pour ce mode de réalisation (et pour tous les modes de réalisation des tubes).

La figure 8 représente un exemple de section elliptique d'un tube 1 pour un garnissage structuré selon l'invention.

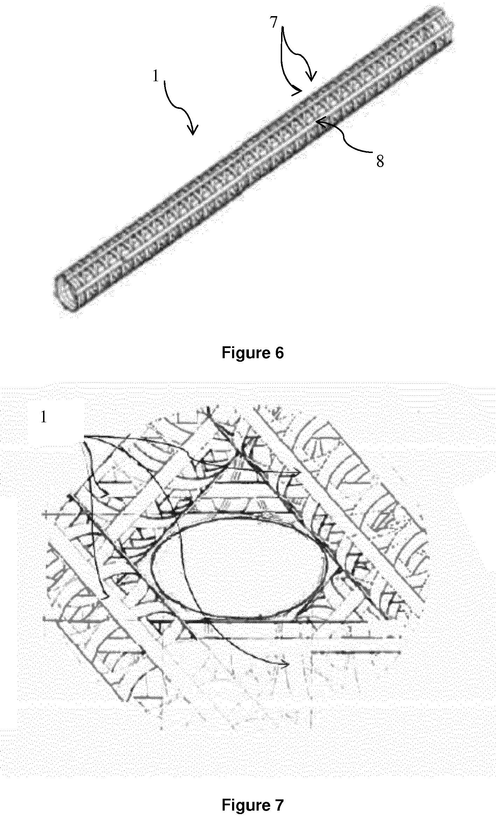

La figure 6 représente un exemple de tube 1 de section polygonale pour un garnissage structuré selon l'invention. Selon un mode de réalisation de l'invention, le tube 1 illustré est formé par un ensemble d'anneaux 7 de forme polygonale, ici hexagonale, reliés par des tiges 8 parallèles à l'axe du tube, et correspondant à des génératrices du tube. Les espaces formés entre les anneaux et les tiges correspondent aux orifices T des tubes.

La figure 7 est une vue de la section de passage pour un tube de section elliptique dans un agencement selon un mode de réalisation selon l'invention. Tel qu'illustré, l'agencement de tubes est formé de tubes de section elliptique 1 selon un mode de réalisation très proche de celui décrit pour la figure 6. La partie centrale de la figure 7 correspond à un espace dans lequel un tube 1 peut être inséré.

Le garnissage interne de colonne de mise en contact selon la présente invention permet d'obtenir d'excellents résultats dans les opérations de distillation, notamment pour la fabrication des dérivés fluorés nécessitant des distillations en présence de HF (acide fluorhydrique) ou la distillation de certains acides organiques, tel l'acide formique ou l'acide acétique. Il est également particulièrement bien adapté aux applications d'absorption réactive, notamment la capture de dioxyde de carbone en post-combustion et le traitement du gaz naturel, par mise en contact du gaz avec une solution liquide absorbante.

La présente invention concerne, en outre, un procédé de fabrication d'une structure de garnissage d'une colonne de mise en contact de fluides. Le procédé de fabrication permet de réaliser une structure de garnissage selon l'une quelconque des variantes de réalisation décrites précédemment. Pour le procédé de fabrication selon l'invention, on réalise les étapes suivantes :

a) on fabrique des tubes comportant des orifices disposés de manière à favoriser la circulation et le mélange des fluides dans la structure. Les tubes peuvent notamment prendre la forme d'un tube tel qu'illustré sur l'une des figures 1, 2 ou 6. Le tube peut avoir une section de forme quelconque : carré, rectangle, polygone, cercle, ellipse... Par exemple, une section elliptique telle qu'illustrée sur la figure 8. Les tubes peuvent être réalisés avec tout type de matériau, par exemple en carbone/carbone, c'est-à-dire une structure en fibres de carbone figée par dépôt de carbone, en céramique, en métal, en matière polymère, en matériau thermoplastique ou en matériau thermodurcissable.

Pour un tube selon le mode de réalisation de la figure 1, sa fabrication peut consister à réaliser dans un premier temps un tube plein, puis à découper des orifices aux endroits souhaités, par exemple par usinage ou par perçage. Le tube peut être obtenu par moulage, par exemple d'un matériau polymère, par formage, ou tout autre procédé.

Pour un tube selon le mode de réalisation de la figure 2, sa fabrication peut être mise en oeuvre par tissage de rubans, par exemple des mèches, des fils, des feuillards, épousant une forme tubulaire. Plus précisément, un premier ruban peut être enroulé, en formant une hélice, autour d'un tube et un deuxième ruban peut être également enroulé, en formant une hélice, autour du même tube, en étant croisé par rapport au premier ruban. On choisit l'épaisseur des rubans et le pas des hélices de manière à ce qu'il subsiste des espaces entre les rubans. Le tube peut être réalisé par plusieurs paires de ruban enroulé.

Pour un tube selon le mode de réalisation de la figure 6, sa fabrication peut être mise en oeuvre par :

- fabrication d'anneaux de forme souhaitée, polygone, cercle, ellipse,
- fabrication de tiges, et
- fixation des tiges sur les anneaux, les tiges correspondant à la génératrice du tube et les anneaux correspondant à la section du tube. Si les anneaux et les tiges sont métalliques, la fixation peut être réalisée par soudage. Si les anneaux et les tiges sont en matériau polymère, leur fixation peut être réalisée par collage ou au cours du procédé de polymérisation de la matière, thermoplastique ou thermodurcissable.

b) Ensuite, on construit un assemblage ordonné des tubes en juxtaposant des faisceaux de tubes. Selon l'invention, chaque faisceau de tubes comprend quatre tubes respectivement orientés suivant quatre directions d'un parallélépipède rectangle, le parallélépipède rectangle comportant une dimension supérieure aux autres. De préférence, la plus grande dimension du parallélépipède correspond à la direction verticale de la structure de garnissage (cf. figure 3). Les directions d'un parallélépipède rectangle correspondent sensiblement aux quatre diagonales d'un parallélépipède rectangle, à ceci près que les tubes ne s'entrecoupent pas au niveau de l'intersection des diagonales au centre du parallélépipède rectangle, mais se croisent au voisinage de ce point. Grâce à cet agencement des tubes, la capacité de la structure de garnissage est augmentée.

Avantageusement, l'angle formé par l'axe de chaque tube par rapport au plan horizontal, dans un plan vertical passant par l'axe du tube, est compris entre 20 et 54° pour obtenir un effet important pour la capacité de la structure de garnissage. De manière préférée, cet angle est compris entre 30 et 45° pour obtenir des résultats optimaux en termes de capacité de la structure de garnissage.

La construction de l'assemblage ordonné peut débuter par exemple en répétant la disposition de la figure 3, c'est à dire en disposant suivant un axe de construction XX', correspondant au point d'entrecroisement des quatre tubes d'un faisceau, un nouveau faisceau de tubes 1a à 1d disposé dans le même ordre que le faisceau précédent, et ainsi de suite. On obtient ainsi, comme représenté sur la figure 4, un début d'assemblage ordonné formé d'une première rangée 100a de faisceaux de tubes 1a à 1d alignés suivant l'axe de construction XX'. On forme ainsi un entrecroisement de quatre réseaux de tubes 11 à 14 qui s'étendent chacun dans un plan orienté suivant une des quatre directions d'assemblage des tubes dans un faisceau. Les tubes de chaque réseau sont espacés les uns des autres par une distance permettant le passage (entrecroisement) des tubes des autres réseaux.

Lorsqu'on a atteint le nombre désiré de faisceaux dans la rangée 100a, on superpose ensuite plusieurs séries de rangées de faisceaux suivant des axes parallèles à l'axe XX' de manière à remplir le volume libre autour de la rangée 100a. Ensuite, la structure de garnissage est obtenue par ajout d'une rangée supplémentaire de faisceaux selon un nouvel axe parallèle à l'axe de construction XX'. On complète ensuite de la même façon le volume libre de part et d'autre de la rangée, typiquement jusqu'à l'extrémité des tubes de la rangée 100a, de manière à obtenir dans ce volume une structure tridimensionnelle formée de tubes respectivement disposés suivant quatre directions.

c) L'étape suivante consiste à lier les tubes entre eux, de manière à créer un agencement rigide. Selon un mode de réalisation de l'invention, les tubes sont liés entre eux au niveau des portions de contact entre tubes. La liaison peut être réalisée par un procédé chimique ou mécanique, par exemple, à l'aide d'une résine thermoplastique ou thermodurcissable, par collage, par dépôt de carbone, par soudage, par crochetage mécanique ou tout autre moyen.

Ensuite, le procédé de fabrication selon l'invention peut comprendre l'une des étapes d) ou d') décrite ci-dessous ou une étape analogue, qui permet de donner une forme à la structure de garnissage.

d) Selon un mode de réalisation de l'invention, les blocs de garnissage structuré peuvent être usinés aux dimensions et à la forme de la colonne de mise en contact. En général, les colonnes de mise en contact comportent une enceinte cylindrique. Dans ce cas, on usine l'assemblage ordonné de tubes pour obtenir une structure de garnissage qui présente une forme cylindrique qui peut être introduite dans l'enceinte cylindrique de la colonne de manière à occuper un maximum d'espace dans la colonne et offrir ainsi une surface d'échange optimale.

d') Alternativement, pour les colonnes de grand diamètre, on effectue une juxtaposition de plusieurs blocs. Les blocs situés à la périphérie interne de la paroi sont usinés pour être adaptés à la forme cylindrique de la colonne. L'usinage des blocs formés par l'assemblage des éléments tubulaires est très délicat compte tenu de la forte porosité intrinsèque à la construction. Selon la nature des matériaux, on emploie des techniques particulières d'usinage pour éviter le flambage des éléments ou l'effondrement de la structure, par exemples par usinage laser, jet d'eau ou usinage à grande vitesse d'outils.

Selon une variante de réalisation de l'invention, les blocs de garnissage structuré peuvent être usinés sous forme de blocs parallélépipédiques rectangles. Puis, les blocs sont agencés dans une colonne de mise en contact, de manière à ce que leurs longueurs (la plus grande dimension) soient parallèles à l'axe de la colonne, c'est-à-dire l'axe vertical. L'agencement des blocs peut être réalisé par tranches successives, sans orientation particulière d'une tranche à l'autre. La figure 5 est un exemple de bloc parallélépipédique rectangle pouvant être usiné pour ce mode de réalisation de l'invention. La figure 9 illustre un exemple non limitatif d'agencement de blocs parallélépipédiques rectangles 6 dans une colonne 5. Pour cet exemple, les blocs sont répartis sur deux tranches de garnissage structuré disposées l'une au-dessus de l'autre.

### Exemple comparatif

Un exemple comparatif de la structure de garnissage selon l'invention avec une structure de garnissage selon l'art antérieur avec un ordonnancement des faisceaux de tubes selon les quatre directions d'un cube (brevet FR 2913897 (US 8505884)) permet de montrer les gains en termes de perte de charges, et donc une augmentation de la capacité, pour la structure de garnissage selon l'invention.

L'exemple consiste à mettre en contact dans une colonne un liquide, de l'eau, avec un gaz, de l'air, circulant à contre-courant, au moyen d'un garnissage structuré.

Pour les deux conceptions comparées du garnissage structuré, le diamètre hydraulique des tubes est de 12 mm, le taux d'ouverture des tubes est de 50 %, le débit de gaz est constant à une pression absolue de 1,5 bars et à une température ambiante, et le diamètre de la colonne est de 150 mm.

De plus, pour la conception selon l'invention, les tubes ont une section elliptique, et l'angle des tubes par rapport à un axe vertical est de 30°.

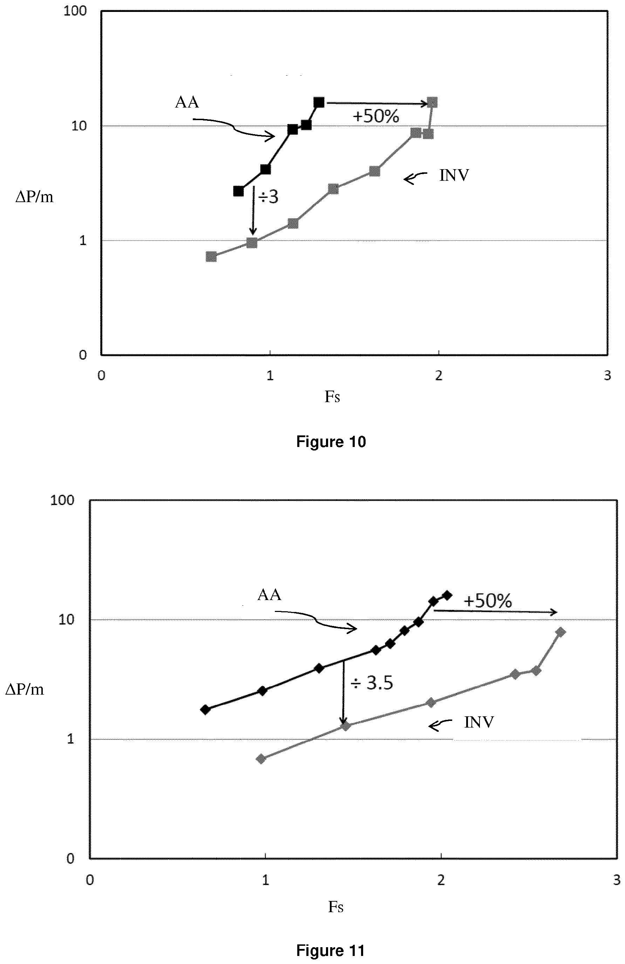

La figure 10 représente la perte de charge linéique $\Delta P/m$ exprimée en mbar/mm en fonction du facteur cinétique Fs exprimé en $\sqrt{Pa}$ pour différentes configurations dont une avec des tubes inclinés selon l'art antérieur AA (brevet FR 2913897) et l'autre à 30° selon l'invention INV. Le facteur cinétique caractérise l'énergie cinétique du gaz dans le garnissage. Cette valeur prend en compte l'effet de la pression sur la capacité du garnissage. Pour l'exemple de la figure 10, le débit liquide est de 100 $m^3/h/m^2$. Le gain en capacité mesuré pour ce débit liquide est de 50%, et la réduction en perte de charge linéique est d'un facteur 3.

La figure 11 est une courbe identique à la courbe de la figure 10, pour un exemple pour lequel le débit de liquide est 50 $m^3/h/m^2$. Avec ce débit liquide, les variations sont similaires à ceux de l'exemple de la figure 10 : un gain de 50% de la capacité et une réduction en perte de charge linéique d'un facteur proche de 3,5..

Ainsi, la structure de garnissage selon l'invention présente une capacité augmentée par rapport à la structure de garnissage selon l'art antérieur.

### Revendications

1. Structure de garnissage d'une colonne de mise en contact de fluides, ladite structure formant un volume comportant un agencement ordonné de faisceaux de tubes (1), les parois desdits tubes comportant des orifices (T, E) disposés de manière à favoriser la circulation et le mélange des fluides dans ladite structure, **caractérisée en ce que** chaque faisceau comprend quatre tubes (1a, 1b, 1c, 1d) respectivement orientés suivant les quatre directions formées par les diagonales d'un parallélépipède rectangle, ledit parallélépipède rectangle comportant une dimension d'un côté supérieure aux autres.

2. Structure selon la revendication 1, dans laquelle la plus grande dimension du parallélépipède rectangle est orientée selon un axe vertical.

3. Structure selon l'une des revendications précédentes, dans laquelle l'angle d'orientation de l'axe desdits tubes (1) par rapport à un axe vertical est compris entre 20 et 50°, de préférence entre 30 et 45°.

4. Structure selon l'une des revendications précédentes, dans laquelle le diamètre hydraulique ($\theta$) des tubes (1) est compris entre 5 et 50 mm.

5. Structure selon l'une des revendications précédentes, dans laquelle lesdits tubes (1) ont sensiblement une section circulaire ou elliptique.

6. Structure selon la revendication 5, dans laquelle la section desdits tubes (1) est un polygone.

7. Structure selon l'une des revendications précédentes, dans laquelle ladite structure comporte une pluralité de blocs parallélépipédiques (6) formés par l'agencement ordonné de faisceaux de tubes.

8. Structure selon l'une des revendications précédentes, dans laquelle lesdits orifices (T, E) sont inscrits dans des rectangles dont les côtés mesurent entre 2 et 45 mm et chacun desdits orifices s'étend sur une aire supérieure à 2 mm$^2$.

9. Structure selon l'une des revendications précédentes, dans laquelle le rapport entre l'aire des orifices (T, E) et l'aire de la partie pleine desdits tubes (1) est compris entre 10 et 90 %, de préférence entre 25 et 50 %.

10. Structure selon l'une des revendications précédentes, dans laquelle lesdits tubes (1) comportent un tissage d'au moins deux rubans (2a, 2b, 3a, 3b) enroulés suivant au moins deux hélices croisées s'étendant selon un même axe et un même diamètre, lesdits rubans (2a, 2b, 3a, 3b) étant distants les uns des autres de manière à former lesdits orifices (E).

11. Structure selon l'une des revendications précédentes, dans laquelle lesdits tubes (1) sont formés par une pluralité d'anneaux (7) reliées par au moins une tige (8), ladite tige (8) étant disposée selon une génératrice dudit tube (1).

12. Structure selon l'une des revendications précédentes, dans laquelle lesdits tubes (1) sont réalisés dans un matériau choisi parmi le carbone figé par dépôt de carbone, un métal, une céramique, un matériau polymère un matériau thermoplastique, un matériau thermodurcissable.

13. Colonne de mise en contact de fluides (5) comprenant un garnissage, **caractérisée en ce que** ledit garnissage comporte une structure de garnissage selon l'une des revendications précédentes.

14. Utilisation d'une colonne de mise en contact de fluides (5) selon la revendication 13 dans un procédé de distillation, un procédé d'absorption réactive, tel que la capture de gaz acides et le traitement de gaz naturel.

15. Procédé de fabrication d'une structure de garnissage d'une colonne de mise en contact de fluides, dans lequel on réalise les étapes suivantes :

a) on fabrique des tubes (1) comportant des orifices (T, E) disposés de manière à favoriser la circulation et le mélange des fluides dans la structure ;
b) on construit un assemblage ordonné desdits tubes (1) en juxtaposant des faisceaux de tubes, lesdits faisceaux de tubes comprenant quatre tubes (1a, 1b, 1c, 1d) respectivement orientés suivant les quatre directions formées par les diagonales d'un parallélépipède rectangle, ledit parallélépipède rectangle comportant une dimension supérieure aux autres ; et
c) on réalise une liaison des tubes (1) au niveau de leur portion de contact.

16. Procédé selon la revendication 15, dans lequel, à l'étape a), on fabrique des tubes (1) de section circulaire ou elliptique.

17. Procédé selon la revendication 16, dans lequel la section desdits tubes (1) est un polygone.

18. Procédé selon l'une des revendications 15 à 17, dans lequel on oriente la plus grande dimension dudit parallélépipède rectangle selon un axe vertical.

19. Procédé selon l'une des revendications 15 à 18, dans lequel ledit procédé comprend une étape d'usinage de l'assemblage ordonné pour former des blocs parallélépipédiques rectangles (6), et une étape d'agencement des blocs (6) dans ladite colonne de mise en contact (5).

**Patentansprüche**

1. Packungsstruktur für eine Kolonne zur Kontaktierung von Fluiden, wobei die Struktur ein Volumen bildet, das eine geordnete Anordnung von Rohrbündeln (1) umfasst, wobei die Wände der Rohre Öffnungen (T, E) umfassen, die angeordnet sind, um das Zirkulieren und das Mischen der Fluide in der Struktur zu fördern, **dadurch gekennzeichnet, dass** jedes Bündel vier Rohre (1a, 1b, 1c, 1d) umfasst, die jeweils in den vier Richtungen ausgerichtet sind, die von den Diagonalen eines rechtwinkligen Parallelepipeds gebildet werden, wobei das rechtwinklige Parallelepiped eine Seitenabmessung umfasst, die größer ist als die anderen.

2. Struktur nach Anspruch 1, wobei die größte Abmessung des rechtwinkligen Parallelepipeds in einer vertikalen Achse ausgerichtet ist.

3. Struktur nach einem der vorhergehenden Ansprüche, wobei der Ausrichtungswinkel der Achse der Rohre (1) in Bezug auf eine vertikale Achse im Bereich zwischen 20 und 50°, vorzugsweise zwischen 30 und 45° liegt.

**4.** Struktur nach einem der vorhergehenden Ansprüche, wobei der hydraulische Durchmesser (8) der Rohre (1) im Bereich zwischen 5 und 50 mm liegt.

**5.** Struktur nach einem der vorhergehenden Ansprüche, wobei die Rohre (1) einen im Wesentlichen kreisförmigen oder elliptischen Querschnitt aufweisen.

**6.** Struktur nach Anspruch 5, wobei der Querschnitt der Rohre (1) ein Polygon ist.

**7.** Struktur nach einem der vorhergehenden Ansprüche, wobei die Struktur eine Vielzahl von parallelflachen Blöcken (6) aufweist, die durch die geordnete Anordnung von Rohrbündeln gebildet werden.

**8.** Struktur nach einem der vorhergehenden Ansprüche, wobei die Öffnungen (T, E) die Form von Rechtecken aufweisen, deren Seiten zwischen 2 und 45 mm messen und wobei sich jede der Öffnungen über eine Fläche größer 2 mm$^2$ erstreckt.

**9.** Struktur nach einem der vorhergehenden Ansprüche, wobei das Verhältnis zwischen der Fläche der Öffnungen (T, E) und der Fläche des geschlossenen Abschnitts der Rohre (1) im Bereich zwischen 10 und 90 %, vorzugsweise zwischen 25 und 50 % liegt.

**10.** Struktur nach einem der vorhergehenden Ansprüche, wobei die Rohre (1) ein Gewebe aus mindestens zwei Streifen (2a, 2b, 3a, 3b) umfassen, die als mindestens zwei gekreuzte Spiralen gewickelt sind, die sich entlang einer gleichen Achse erstrecken und einen gleichen Durchmesser aufweisen, wobei die Streifen (2a, 2b, 3a, 3b) voneinander beabstandet sind, um die Öffnungen (E) zu bilden.

**11.** Struktur nach einem der vorhergehenden Ansprüche, wobei die Rohre (1) aus einer Vielzahl von Ringen (7) gebildet werden, die durch mindestens eine Stange (8) verbunden sind, wobei die Stange (8) entlang einer Mantellinie des Rohrs (1) angeordnet ist.

**12.** Struktur nach einem der vorhergehenden Ansprüche, wobei die Rohre (1) aus einem Material hergestellt sind, ausgewählt aus Kohlenstoff, der durch Ablagerung von Kohlenstoff verfestigt ist, einem Metall, einer Keramik, einem Polymermaterial, einem thermoplastischen Material, einem duroplastischen Material.

**13.** Kolonne zur Kontaktierung von Fluiden (5) umfassend eine Packung, **dadurch gekennzeichnet, dass** die Packung eine Packungsstruktur nach einem der vorhergehenden Ansprüche umfasst.

**14.** Verwendung einer Kolonne zur Kontaktierung von Fluiden (5) nach Anspruch 13 in einem Destillationsverfahren, einem Verfahren zur reaktiven Absorption, wie beispielsweise der Abscheidung von Sauergasen und der Behandlung von Erdgas.

**15.** Verfahren zur Herstellung einer Packungsstruktur einer Kolonne zur Kontaktierung von Fluiden, wobei die folgenden Schritte durchgeführt werden:

a) Herstellen der Rohre (1), die die Öffnungen (T, E) umfassen, die angeordnet sind, um das Zirkulieren und das Mischen der Fluide in der Struktur zu fördern;
b) Konstruieren einer geordneten Anordnung der Rohre (1), indem Rohrbündel nebeneinander angeordnet werden, wobei die Rohrbündel vier Rohre (1a, 1b, 1c, 1d) umfassen, die jeweils in den vier Richtungen ausgerichtet sind, die von den Diagonalen eines rechtwinkligen Parallelepipeds gebildet werden, wobei das rechtwinklige Parallelepiped eine Abmessung umfasst, die größer ist als die anderen; und
c) Verbinden der Rohre (1) an ihrem Kontaktabschnitt.

**16.** Verfahren nach Anspruch 15, wobei in Schritt a) Rohre (1) mit kreisförmigem oder elliptischem Querschnitt hergestellt werden.

**17.** Verfahren nach Anspruch 16, wobei der Querschnitt der Rohre (1) ein Polygon ist.

**18.** Verfahren nach einem der vorhergehenden Ansprüche 15 bis 17, wobei die größte Abmessung des rechtwinkligen Parallelepipeds entlang einer vertikalen Achse ausgerichtet wird.

**19.** Verfahren nach einem der vorhergehenden Ansprüche 15 bis 18, wobei das Verfahren einen Schritt zum Bearbeiten der geordneten Anordnung umfasst, um rechtwinklige Parallelepipedblöcke (6) zu bilden, und einen Schritt zur Anordnung der Blöcke (6) in der Kolonne (5).

**Claims**

**1.** A packing structure for a fluid contacting column, said structure forming a volume comprising an ordered arrangement of bundles of tubes (1), the walls of said tubes comprising orifices (T, E) provided so as to promote circulation and mixing of the fluids in said structure, **characterized in that** each bundle comprises four tubes (1a, 1b, 1c, 1d) respectively oriented in the four directions formed by the diagonals of a rectangular parallelepiped, said rectangular parallelepiped having one side dimension larger than the others.

2.  A structure as claimed in claim 1, wherein the larger dimension of the rectangular parallelepiped is oriented along a vertical axis.

3.  A structure as claimed in any one of the previous claims, wherein the angle of orientation of the axis of said tubes (1) with respect to a vertical axis ranges between 20° and 50°, preferably between 30° and 45°.

4.  A structure as claimed in any one of the previous claims, wherein hydraulic diameter ($\theta$) of tubes (1) ranges between 5 and 50 mm.

5.  A structure as claimed in any one of the previous claims, wherein said tubes (1) have a substantially circular or elliptical section.

6.  A structure as claimed in claim 5, wherein the section of said tubes (1) is a polygon.

7.  A structure as claimed in any one of the previous claims, wherein said structure comprises a plurality of parallelepipedic blocks (6) made up of the ordered arrangement of tube bundles.

8.  A structure as claimed in any one of the previous claims, wherein said orifices (T, E) are inscribed in rectangles whose sides range between 2 and 45 mm, and each one of said orifices extends over a surface area greater than 2 mm$^2$.

9.  A structure as claimed in any one of the previous claims, wherein the ratio of the surface area of orifices (T, E) to the surface area of the solid part of said tubes (1) ranges between 10 % and 90 %, preferably between 25 % and 50 %.

10. A structure as claimed in any one of the previous claims, wherein said tubes (1) comprise a cloth of at least two strips (2a, 2b, 3a, 3b) wound as two crossed helices extending along the same axis and with the same diameter, said strips (2a, 2b, 3a, 3b) being distant from one another so as to form said orifices (E).

11. A structure as claimed in any one of the previous claims, wherein said tubes (1) consist of a plurality of rings (7) connected by at least one rod (8), said rod (8) being arranged along a generatrix of said tube (1).

12. A structure as claimed in any one of the previous claims, wherein said tubes (1) are made of a material selected from among carbon congealed by carbon deposition, metal, ceramic, a polymer material or a thermoplastic material, a thermosetting material.

13. A fluid contacting column (5) comprising a packing, **characterized in that** said packing comprises a packing structure as claimed in any one of the previous claims.

14. Use of a fluid contacting column (5) as claimed in claim 13 in a distillation process, a reactive absorption process, such as acid gas capture and natural gas treatment.

15. A method of manufacturing a packing structure for a fluid contacting column, wherein the following stages are carried out:

    a) manufacturing tubes (1) comprising orifices (T, E) arranged so as to promote circulation and mixing of the fluids in the structure,
    b) constructing an ordered assembly of said tubes (1) by juxtaposing bundles of tubes, said tube bundles comprising four tubes (1a, 1b, 1c, 1d) respectively oriented in the four directions formed by the diagonals of a rectangular parallelepiped, said rectangular parallelepiped having one dimension larger than the others, and
    c) linking tubes (1) together at the contact portion thereof.

16. A method as claimed in claim 15 wherein, in stage a), tubes (1) of circular or elliptical section are manufactured.

17. A method as claimed in claim 16, wherein the section of said tubes (1) is a polygon.

18. A method as claimed in any one of claims 15 to 17, wherein the larger dimension of said rectangular parallelepiped is oriented is oriented along a vertical axis.

19. A method as claimed in any one of claims 15 to 18, wherein said method comprises a stage of machining the ordered assembly so as to form rectangular parallelepiped blocks (6) and a stage of laying out blocks (6) in said contacting column (5).

EP 3 144 060 B1

Figure 1

Figure 2

Da

Dc

Dd

Db

1d

1b

1c

1a

**Figure 3**

**Figure 4**

Figure 5

**Figure 6**

**Figure 7**

1

**Figure 8**

5

6

**Figure 9**

**Figure 10**

**Figure 11**

**EP 3 144 060 B1**

## RÉFÉRENCES CITÉES DANS LA DESCRIPTION

**Documents brevets cités dans la description**

- EP 0449040 A
- FR 2913897
- US 8505884 B
- EP 0499040 A